# FASCICULE DE BREVET EUROPEEN

(11) **EP 2 859 278 B1**
(45) Date de publication et mention de la délivrance du brevet: **27.07.2016**
(21) Numéro de dépôt: 13727258.9
(22) Date de dépôt: 03.05.2013
(51) Int. Cl.: F24J 1/00, F01D 25/10, F02N 19/04, F02N 19/10, B60H 1/00, F02D 41/06, F01P 11/20

(54) **DISPOSITIF DE CHAUFFAGE D'AU MOINS UN COMPOSANT D'UN VÉHICULE**
VORRICHTUNG ZUM ERWÄRMEN MINDESTENS EINER KOMPONENTE EINES FAHRZEUGS
DEVICE FOR HEATING AT LEAST ONE COMPONENT OF A VEHICLE

(30) Priorité: 11.05.2012 FR 1254322
(43) Date de publication de la demande: 15.04.2015
(73) Titulaire: Valeo Systèmes de Contrôle Moteur, 95800 Cergy Saint Christophe (FR)
(72) Inventeur: ALFANO, Damien, 78630 Orgeval (FR); LARTIGUE, Pauline, 47250 Argenton (FR)
(74) Mandataire: Garcia, Christine
(86) Numéro de dépôt international: PCT/FR2013/050999
(87) Numéro de publication internationale: WO 2013/167834

(56) Documents cités:
- EP-A1- 0 365 793
- EP-A1- 1 331 113
- DE-A1- 3 504 718
- DE-A1- 3 922 737
- DE-C1- 3 922 736
- US-A- 5 398 747

## Description

La présente invention concerne le chauffage d'au moins un composant d'un véhicule. L'invention s'applique notamment, mais non exclusivement, au chauffage d'un moteur thermique lors de son démarrage, par exemple un moteur à combustion interne.

Chauffer le moteur thermique lorsqu'il démarre peut permettre de réduire la consommation en essence et/ou les émissions de polluants. Cette chaleur peut également, dans des conditions de grand froid, être transmise à l'habitacle pour améliorer le confort des utilisateurs du véhicule.

Des solutions existant pour chauffer un moteur thermique lors du démarrage d'un véhicule sont par exemple : l'utilisation d'une bougie de pré-chauffage, l'encapsulation du moteur, l'enrichissement du mélange air/carburant pour obtenir plus rapidement un meilleur rendement du moteur, l'emploi d'éléments de chauffage externes fixés sur le bas du bloc moteur, l'utilisation d'un thermoplongeur plongeant dans l'huile du bloc moteur.

Ces différentes solutions ne sont pas réellement satisfaisantes en termes de consommation et/ou de coût et/ou de durée de vie et/ou d'efficacité du transfert de chaleur au moteur thermique.

On connaît par ailleurs des réactifs, tel que la zéolite, susceptibles de réagir de façon fortement exothermique avec un fluide de réaction et d'être régénérés ultérieurement.

Il existe un besoin pour permettre de chauffer un composant d'un véhicule, notamment un moteur thermique, de façon simple, efficace et peu coûteuse.

L'invention a pour but de répondre à ce besoin et elle y parvient, selon l'un de ses aspects, à l'aide d'un dispositif de chauffage d'au moins un composant d'un véhicule, comprenant les caractéristiques de la revendication 1.

Dans le dispositif ci-dessus, tout ou partie du circuit d'alimentation en fluide de réaction sert également à l'échange de chaleur avec le composant à chauffer, contrairement à des solutions dans lesquelles les fonctions d'alimentation en fluide de réaction, d'échange de chaleur avec le composant à chauffer, et de régénération du réactif sont assurées par un circuit distinct dédié à chacune de ces fonctions. On réduit ainsi l'encombrement dans le véhicule lié à la présence du dispositif de chauffage, ce qui peut également apporter un gain en termes de coût et de poids.

Le dispositif peut être utilisé de façon cyclique, chaque cycle comprenant successivement:
- une phase de stockage dans laquelle le dispositif est au repos,
- une phase de réaction lors de laquelle la réaction exothermique entre le fluide de réaction et le réactif a lieu dans le réacteur, cette phase étant initiée lorsque l'on amène le fluide de réaction au contact du réactif. La chaleur dégagée par la réaction est alors transmise vers le composant du véhicule à l'aide du circuit d'échange de chaleur, et
- une phase de régénération lors de laquelle le réactif et le fluide de réaction sont ramenés à l'état qu'ils avaient préalablement à la réaction exothermique pour pouvoir réagir de nouveau ensemble lors du prochain cycle de fonctionnement. Cette phase de régénération est notamment effectuée en amenant grâce au circuit de régénération de la chaleur dans le réacteur.

Le réacteur peut comprendre une enceinte définissant tout ou partie de ladite portion commune au circuit d'alimentation en fluide de réaction et au circuit d'échange de chaleur. Tout ou partie du volume de l'enceinte peut être occupé par le fluide d'échange de chaleur et/ou le fluide de réaction. L'un et/ou l'autre de ces derniers peuvent venir au contact de la paroi de cette enceinte qui délimite alors extérieurement la portion commune au niveau du réacteur. Contrairement à d'autres solutions, l'échange de chaleur ne se fait pas par l'intermédiaire d'un fluide confiné dans des conduites disposées dans l'enceinte du réacteur.

Le réacteur peut être qualifié de réacteur « trois fluides », recevant trois fluides ayant chacun une fonction distincte, à savoir :
- le fluide de réaction réagissant avec le réactif,
- le fluide d'échange de chaleur circulant entre le réacteur et le composant à chauffer pour lui transférer la chaleur dégagée par la réaction, et
- le fluide de régénération régénérant le réactif et, le cas échéant, le fluide de réaction.

En variante, comme on le verra par la suite, le fluide de réaction et le fluide d'échange de chaleur peuvent correspondre à un seul et même fluide.

Le dispositif fournit avantageusement une architecture adaptée au dégagement de chaleur par le réactif, au transfert de cette chaleur au composant à chauffer et à la régénération du réactif.

Le réactif peut être la zéolite et le fluide de réaction peut être une solution aqueuse. Au sens de la présente invention, « solution aqueuse» désigne aussi bien de l'eau seule qu'un mélange d'eau et d'un ou plusieurs autres composants en proportions plus ou moins importantes avec l'eau. Un exemple d'une telle solution aqueuse est un mélange d'eau et de glycol, par exemple en proportions égales.

La zéolite peut se présenter sous la forme de billes empilées dans le réacteur. La zéolite peut être anhydre avant la réaction avec le fluide de réaction.

La réaction d'adsorption de l'eau par la zéolite anhydre est fortement exothermique, la zéolite ayant notamment une capacité massique de stockage de 300 Wh pour 1 kg de zéolite.

Le circuit de régénération du réactif peut former une partie de la ligne d'échappement du moteur. Dans ce cas, le fluide de régénération parcourant le circuit de régénération est constitué par les gaz d'échappement. Le choix d'un tel fluide de régénération permet de valoriser les gaz d'échappement.

Le circuit de régénération peut comprendre en parallèle de la portion s'étendant dans le réacteur une portion contournant le réacteur. On peut ainsi réguler le flux des gaz d'échappement dans le réacteur, notamment dans un souci de ne pas atteindre des valeurs de température trop importantes dans le réacteur.

Selon l'invention, le circuit d'alimentation en fluide de réaction comprend une portion propre parcourue par le fluide de réaction et le circuit d'échange de chaleur comprend une portion propre parcourue par le fluide d'échange de chaleur. Seule une portion du circuit d'alimentation en fluide de réaction fait dans ce cas également partie du circuit d'échange de chaleur.

La portion propre au circuit d'échange de chaleur peut alors comprendre un échangeur thermique pour transférer la chaleur dégagée par la réaction à un sous-circuit additionnel du circuit d'échange de chaleur, ledit sous-circuit circulant dans ou à proximité du composant du véhicule à chauffer, et la portion propre au circuit d'alimentation en fluide de réaction peut comprendre un condenseur. L'échangeur thermique est par exemple de type « stacked plate engine oil cooler » (« échangeur à plaques » en français).

Le sous-circuit additionnel est notamment parcouru par un fluide de nature différente de celui circulant dans le circuit d'échange de chaleur.

Le condenseur peut être relié au réacteur par une conduite de la portion propre au circuit d'alimentation en fluide de réaction. Le condenseur peut être disposé en altitude vis-à-vis du réacteur de manière à ce que ladite conduite soit parcourue par le fluide de réaction à l'état gazeux du réacteur vers le condenseur.

Selon un premier sous-mode de ce premier mode de réalisation, la portion propre au circuit d'alimentation en fluide de réaction et la portion propre au circuit d'échange de chaleur peuvent se rejoindre en amont du réacteur pour former la portion commune et ladite portion commune peut comprendre un mélangeur configuré pour disperser le fluide de réaction au sein du fluide d'échange de chaleur.

Selon ce sous-mode, la portion commune peut comprendre, notamment être formée par, l'enceinte du réacteur et la zone entre le mélangeur et le réacteur en amont du réacteur.

Selon ce sous-mode, le fluide de réaction et le fluide d'échange de chaleur peuvent être de nature différente et les quantités respectives du fluide de réaction et du fluide d'échange de chaleur peuvent être choisies de manière à ce que le fluide d'échange de chaleur soit en excès par rapport au fluide de réaction. Le fluide de réaction peut alors être transporté par le fluide d'échange de chaleur du mélangeur jusqu'au réacteur et être diffusé dans l'enceinte par le fluide d'échange de chaleur. Cela peut favoriser une diffusion relativement homogène du fluide de réaction dans l'enceinte du réacteur, permettant que le plus de réactif possible soit engagé dans la réaction exothermique. En outre, comme mentionné ci-après, lors de la régénération, la chaleur apportée par le fluide de régénération peut être diffusée dans l'enceinte par le fluide d'échange de chaleur de façon relativement homogène afin de régénérer la plus grande quantité possible de réactif.

Le fluide d'échange de chaleur peut avoir des rôles différents selon la zone du circuit d'échange de chaleur dans laquelle il se trouve :
- en amont du réacteur : amener le fluide de réaction du mélangeur dans le réacteur,
- dans le réacteur : répartir de façon homogène le fluide de réaction dans le réacteur lors de la phase de chauffage et répartir de façon homogène la chaleur de régénération dans le réacteur lors de la phase de régénération, et
- en aval du réacteur, transmettre la chaleur dégagée par la réaction vers le composant du véhicule à chauffer.

Le fluide d'échange de chaleur est selon ce sous-mode avantageusement choisi pour ne pas réagir avec le réactif.

La quantité du fluide d'échange de chaleur peut être suffisante pour que la totalité du réactif présent dans le réacteur soit immergée dans le fluide d'échange de chaleur. Le fluide d'échange de chaleur peut comprendre une huile de synthèse tandis que le fluide de réaction peut être une solution aqueuse.

La conduite reliant le réacteur au condenseur et destinée à être parcourue par le fluide de réaction à l'état gazeux peut être dépourvue de vanne empêchant sélectivement la communication fluidique entre le réacteur et le condenseur à travers celle-ci. En effet, lorsque le réactif est immergé dans le fluide d'échange de chaleur, ce dernier peut constituer un écran étanche empêchant des résidus gazeux du fluide de réaction dans le condenseur de gagner le réacteur pour y réagir avec le réactif.

Lors de la régénération, la chaleur véhiculée par le fluide de régénération peut être transmise au fluide d'échange de chaleur dans le réacteur, et via ce fluide d'échange de chaleur, au fluide de réaction dispersé dans ce dernier. La température d'ébullition du fluide de réaction peut être inférieure à celle du fluide d'échange de chaleur. Lorsqu'il s'agit respectivement d'une solution aqueuse et d'huile, l'eau peut lors de la régénération être vaporisée et s'extraire de l'huile, qui demeure liquide, pour passer dans l'air et gagner le condenseur. Le cas échéant, le glycol contenu dans la solution aqueuse peut aussi être vaporisé lors de la régénération et gagner le condenseur.

Selon ce sous-mode, la portion propre au circuit d'alimentation en fluide de réaction peut comprendre un réservoir disposé en aval du condenseur. Ce réservoir peut être relié au mélangeur par une conduite faisant partie de la portion propre au circuit d'alimentation en fluide de réaction.

Toujours selon ce sous-mode :
- le réservoir peut être disposé en altitude vis-à-vis du mélangeur de manière à ce que le fluide de réaction présent dans le réservoir sous forme liquide puisse s'écouler par gravité dans le mélangeur (le cas échéant, une pompe forçant cet écoulement peut cependant être prévue), et/ou
- le condenseur peut être disposé en altitude vis-à-vis du réservoir de manière à ce que le fluide de réaction s'étant condensé dans le condenseur puisse d'écouler par gravité dans le réservoir.

Ainsi, selon ce sous-mode, une fraction de la portion propre au circuit d'alimentation en fluide de réaction peut être parcourue par le fluide de réaction à l'état liquide circulant du réservoir vers le mélangeur lorsque l'on veut provoquer la réaction exothermique d'adsorption et une autre fraction de la portion propre au circuit d'alimentation en fluide de réaction peut être parcourue par le fluide de réaction à l'état gazeux circulant du réacteur vers le condenseur lorsque ce fluide est désorbé du réactif pendant la régénération de ce dernier. On peut ainsi régénérer à la fois le réactif et le fluide de réaction, de sorte que ces derniers seront aptes à réagir de nouveau ensemble lors d'un cycle ultérieur de fonctionnement du dispositif de chauffage.

En outre, la chaleur produite par la condensation du fluide de réaction dans le condenseur peut être réutilisée, par exemple pour chauffer l'habitacle du véhicule ou ledit composant ou un autre composant.

La conduite empruntée par le fluide de réaction à l'état gazeux entre le réacteur et le condenseur peut être disposée à proximité d'une source de chaleur. On réduit ainsi les risques que le fluide désorbé de la zéolite et empruntant cette conduite à l'état gazeux se condense par inadvertance et retombe par gravité dans le réacteur avant d'être parvenu au condenseur.

Selon ce sous-mode, le fluide en aval du mélangeur issu du mélange entre le fluide d'échange de chaleur et le fluide de réaction, peut comprendre au moins un tensioactif. Ce tensioactif peut provenir du fluide de réaction, par exemple le glycol lorsque le fluide de réaction est un mélange d'eau et de glycol. En variante, le tensioactif peut provenir du fluide d'échange de chaleur, étant par exemple un tensioactif mélangé à de l'huile. Le fluide d'échange de chaleur, notamment l'huile, peut en effet former une barrière entre le fluide de réaction et le réactif. Dans le cas de l'huile, sa tension de surface peut être suffisante pour empêcher l'eau du fluide de réaction de venir au contact du réactif et la présence de tensioactif dans le réacteur peut permettre de diminuer la tension de surface et ainsi favoriser le contact entre l'eau et le réactif

En variante, le fluide circulant en aval du mélangeur dans le réacteur est dépourvu de tensioactif et un moyen d'augmentation du débit dans le réacteur peut être prévu pour réduire la tension de surface du fluide d'échange de chaleur.

Une pompe peut être prévue dans le circuit d'échange de chaleur, cette pompe permettant de forcer la circulation du fluide d'échange de chaleur. Lors de la régénération, cette pompe peut être désactivée, afin que le fluide d'échange de chaleur chauffé par le fluide de régénération reste confiné dans le réacteur et ne circule pas dans la portion propre au circuit d'échange de chaleur. On évite ainsi d'avoir à utiliser des pompes et/ou des échangeurs thermiques résistant aux hautes températures, et donc coûteux, et que la chaleur nécessaire à la régénération soit dissipée dans la pompe et/ou dans l'échangeur thermique de la portion propre au circuit d'échange de chaleur alors que ce n'est pas ce qui est souhaité.

Lorsque le fluide de réaction est apte à réagir entièrement avec le réactif (ce qui est le cas lorsque le fluide de réaction est constitué par de l'eau), le réservoir peut contenir un volume de fluide de réaction dont la masse correspond à 15 ou 20% de la masse totale à l'état anhydre de la zéolite dans le réacteur. Cette quantité du fluide de réaction peut permettre que toute la zéolite dans le réacteur soit engagée dans la réaction exothermique pour fournir le plus de chaleur au composant. Lorsque le fluide de réaction ne réagit pas entièrement avec le réactif, ce qui est par exemple le cas lorsqu'il s'agit d'un mélange d'eau et de glycol du fait de la présence du glycol, la partie du fluide de réaction réagissant avec le réactif, typiquement l'eau, occupe un volume dans le réservoir dont la masse correspond à 15 ou 20% de la masse totale à l'état anhydre de la zéolite dans le réacteur.

Selon un deuxième sous-mode du premier mode de réalisation, le fluide d'échange de chaleur et le fluide de réaction sont un seul et même fluide dont une fraction qui circule dans la portion propre au circuit d'alimentation en fluide de réaction forme le fluide de réaction et dont une autre fraction qui circule dans la portion propre au circuit d'échange de chaleur forme le fluide d'échange de chaleur. Ce fluide, appelé « fluide commun » par la suite, peut être une solution aqueuse tel qu'un mélange d'eau et de glycol.

Selon ce deuxième sous-mode, la portion commune au circuit d'alimentation en fluide de réaction et au circuit d'échange de chaleur peut comprendre un réservoir en amont duquel se rejoignent la portion propre au circuit d'alimentation en fluide de réaction et la portion propre au circuit d'échange de chaleur pour former ladite portion commune. Le réservoir peut contenir ce fluide commun à l'état liquide.

Le volume du réservoir peut être supérieur au volume de fluide commun consommé pour réagir avec le réactif. Le volume de fluide commun qui va réagir avec le réactif, similairement à ce qui est indiqué ci-dessus, dans le réservoir correspond par exemple à une masse de fluide supérieure à 15 % ou 20 % de la masse totale à l'état anhydre de la zéolite dans le réacteur. Le volume de fluide commun stocké dans le réservoir peut être tel que, lorsque ce fluide a été transféré dans le réacteur, tout le réactif est immergé dans le fluide commun. Pour ce faire, le fluide commun peut être transféré dans le réacteur avec un débit supérieur à la dynamique de la réaction d'adsorption.

Pour provoquer la réaction exothermique, le fluide commun présent à l'état liquide dans le réservoir peut être amené, de façon naturelle tel que par la gravité ou de façon forcée tel que grâce à une pompe, au contact du réactif dans le réacteur.

Une fraction du fluide commun va réagir avec le réactif pour engager la réaction exothermique, cette fraction formant le fluide de réaction, tandis qu'une autre fraction du fluide va pouvoir circuler dans le circuit d'échange de chaleur pour transmettre la chaleur issue de la réaction exothermique, cette autre fraction formant le fluide d'échange de chaleur.

Selon ce deuxième sous-mode, la portion commune au circuit d'échange de chaleur et au circuit d'alimentation peut comprendre (notamment être formée par) le réservoir, la conduite reliant le réservoir au réacteur et l'enceinte du réacteur. Cette conduite peut être pourvue d'une vanne empêchant sélectivement la communication fluidique entre le réacteur et le réservoir.

La portion propre au circuit d'alimentation peut en outre comprendre une conduite reliant le réacteur et le condenseur. Le condenseur peut être disposé en altitude vis-à-vis du réacteur de manière à ce que ladite conduite soit parcourue du réacteur vers le condenseur par la fraction du fluide à l'état gazeux formant le fluide de réaction.

Toujours selon ce deuxième sous-mode :
- le réservoir peut être disposé en altitude vis-à-vis du réacteur de manière à ce que le fluide présent dans le réservoir sous forme liquide puisse s'écouler par gravité dans le réacteur, et/ou
- le condenseur peut être disposé en altitude vis-à-vis du réservoir de manière à ce que le fluide s'étant condensé dans le condenseur puisse d'écouler par gravité dans le réservoir.

Selon ce deuxième sous-mode, la portion propre au circuit d'échange de chaleur peut comprendre une pompe de recirculation. Lors de la réaction exothermique, cette pompe peut être désactivée, pour empêcher le fluide commun amené dans le réacteur pour provoquer la réaction exothermique de circuler dans la portion propre au circuit d'échange de chaleur. Du fluide commun en excès peut ainsi demeurer dans le réacteur alors que la réaction se produit.

En variante, une stratégie peut être mise en place pour évacuer le maximum de puissance vers le composant à chauffer. On peut par exemple faire recirculer plusieurs fois le fluide commun dans la portion propre au circuit d'échange de chaleur et ainsi de remettre du fluide commun chaud dans le réacteur au cours de la réaction d'adsorption. Plusieurs recirculations peuvent favoriser l'obtention de zéolite saturée.

Pour garantir qu'il reste du fluide commun en excès dans le réacteur malgré la réaction exothermique consommant ce dernier, on peut agir sur la quantité et/ou la nature du réactif

Préalablement à la phase de régénération, l'enceinte du réacteur peut être vidée du fluide commun qui y était encore présent à l'état liquide à l'issue de la réaction exothermique, afin d'éviter que la régénération du réactif ne soit perturbée par la vaporisation de ce fluide commun alors que cette régénération est en cours. On évite ainsi de gaspiller la chaleur nécessaire à la régénération à cause de cette vaporisation. La pompe de la portion propre au circuit d'échange de chaleur peut, dans ce but, être placée à un point bas (au sens de l'altitude) du dispositif.

Comme déjà mentionné en référence au premier sous-mode, la phase de régénération correspond à évacuer l'eau de la zéolite et cette eau désorbée à l'état gazeux peut rejoindre le condenseur dans lequel elle passe à l'état liquide avant de gagner le réservoir. La chaleur produite par cette condensation peut être réutilisée, par exemple pour chauffer l'habitacle du véhicule.

La conduite empruntée par le fluide de réaction à l'état gazeux entre le réacteur et le condenseur peut être disposée à proximité d'une source de chaleur. On réduit ainsi les risques que l'eau extraite de la zéolite et empruntant cette conduite se condense et retombe par inadvertance par gravité dans le réacteur avant d'être parvenue au condenseur.

Selon ce deuxième sous-mode, le fluide commun se diffuse dans le réacteur, de sorte que ce fluide peut être réparti de façon relativement homogène dans l'enceinte pour y réagir avec le plus de réactif possible.

Selon un deuxième mode de mise en oeuvre de l'invention, la portion commune au circuit d'alimentation en fluide de réaction et au circuit d'échange de chaleur peut comprendre un condenseur et un réservoir disposé en sortie du condenseur.

Le circuit d'échange de chaleur peut en outre comporter un sous-circuit additionnel circulant dans le composant du véhicule ou à proximité de ce dernier et circulant dans le condenseur ou disposé à proximité du condenseur pour recevoir la chaleur dégagée par la condensation dans le condenseur.

Selon ce deuxième mode de réalisation, le condenseur joue le rôle d'échangeur thermique et le fluide d'échange de chaleur est confondu avec le fluide de réaction, ce seul fluide étant désigné simplement « fluide commun» ci-après. Le condenseur permet ainsi simultanément de condenser le fluide commun chauffé par la réaction exothermique ou issu de la régénération du réactif et de transmettre la chaleur de condensation au composant à chauffer. On peut ainsi réduire la complexité et le coût du dispositif de chauffage en mutualisant le condenseur et l'échangeur thermique du premier mode de réalisation.

Selon le deuxième mode de réalisation, tout le circuit d'alimentation en fluide de réaction peut faire partie du circuit d'échange de chaleur. Ainsi, contrairement à d'autres dispositifs, il peut ne pas être nécessaire de prévoir un circuit dont au moins une portion est dédiée à l'alimentation en fluide de réaction du réactif.

Toujours selon ce deuxième mode de réalisation:
- le réservoir peut être disposé en altitude vis-à-vis du réacteur de manière à ce que le fluide commun présent dans le réservoir sous forme liquide puisse s'écouler par gravité dans le réacteur, et/ou
- le condenseur peut être disposé en altitude vis-à-vis du réservoir de manière à ce que le fluide commun s'étant condensé dans le condenseur puisse d'écouler par gravité dans le réservoir.

Le condenseur et le réservoir peuvent chacun être reliés au réacteur par une conduite, pourvue ou non d'une vanne.

Lorsque l'on cherche à provoquer la réaction exothermique, on fait circuler, naturellement ou de façon forcée, le fluide commun contenu à l'état liquide dans le réservoir vers le réacteur. Dans le réacteur, similairement au deuxième sous-mode du premier mode de réalisation décrit ci-dessus, une fraction du fluide commun réagit avec le réactif selon la réaction exothermique tandis qu'une autre fraction du fluide commun, en excès, est vaporisée et gagne le condenseur où la chaleur de condensation est transmise au sous-circuit additionnel pour chauffer le composant du véhicule. Cette autre fraction du fluide commun sert ainsi de fluide d'échange de chaleur.

En outre, la condensation du fluide de réaction se produisant également lors de la régénération, de la chaleur peut également être transmise au composant du véhicule lors de cette étape.

Selon ce deuxième mode de réalisation, on réduit ainsi la complexité et le coût du dispositif en mutualisant au maximum les fonctions d'alimentation en fluide de réaction et d'échange de chaleur. En outre, comme mentionné, de la chaleur peut être transférée vers le composant du véhicule à la fois lorsque la réaction exothermique a lieu, mais également lorsque le réactif est régénéré. On peut ainsi simultanément régénérer le réactif et chauffer le composant selon ce deuxième mode de réalisation. Un tel dispositif est simple à utiliser car un seul et même fluide est utilisé pour réagir avec le réactif et pour transporter la chaleur issue de cette réaction.

La quantité de fluide commun dans le réacteur peut être auto-régulée.

Le dispositif peut ou non comporter en outre un circuit auxiliaire reliant le réacteur au réservoir. Ce circuit auxiliaire peut ou non comprendre une pompe permettant de faire passer du fluide à l'état liquide du réacteur vers le réservoir et, le cas échéant, à nouveau dans le réacteur. Lorsque la réaction exothermique a lieu, le fluide n'ayant pas réagi ou n'étant pas vaporisé pour des raisons de mauvaise répartition dans l'enceinte du réacteur peut circuler dans ce circuit auxiliaire pour être ramené ensuite au contact du réactif.

Lorsque l'on souhaite régénérer le réactif, le fluide encore présent à l'état liquide dans l'enceinte peut être évacué vers le réservoir par ce circuit additionnel, ce qui permet d'éviter que la régénération du réactif par désorption du fluide de réaction ne soit parasitée par la vaporisation du fluide commun encore présent dans l'enceinte à l'état liquide. En outre, l'absence de fluide commun dans l'enceinte lors de la régénération peut permettre d'éviter que ce dernier ne soit dégradée par cette régénération..

Le circuit auxiliaire peut en outre comprendre une vanne. L'état de cette vanne peut dépendre de la différence de pression entre l'amont et l'aval de la vanne, la vanne permettant par exemple le passage de fluide lorsque cette différence de pression est supérieure à une valeur donnée.

Un système de vidange du condenseur peut être prévu. Ce système comprend par exemple une pompe à vide configurée pour purger le condenseur des éléments incondensables s'accumulant dans le condenseur au fur et à mesure des cycles de fonctionnement du dispositif.

Selon tous les modes de réalisation ci-dessus, le condenseur peut être dimensionné pour permettre une régénération rapide du réactif, par exemple en moins de vingt minutes.

L'invention a encore pour objet, selon un autre de ses aspects, un procédé de chauffage d'au moins un composant à l'aide d'un dispositif défini ci-dessus, dans lequel :
- on alimente en fluide de réaction le réactif dans le réacteur de manière à provoquer une réaction exothermique dans le réacteur, et
- on transfère la chaleur dégagée par ladite réaction au composant à l'aide d'un fluide d'échange de chaleur circulant dans le circuit d'échange de chaleur.

Comme mentionné ci-dessus, pour réagir avec le réactif et pour transporter la chaleur dégagée par cette réaction, un seul et même fluide peut être utilisé, une fraction de ce fluide formant le fluide de réaction et l'autre fraction de ce fluide formant le fluide d'échange de chaleur.

Du fluide d'échange de chaleur peut être présent à l'état liquide dans le réacteur lorsque la réaction se produit et être vaporisé du fait de la chaleur dégagée par cette réaction. Ce fluide à l'état gazeux peut alors transporter la chaleur dégagée vers le composant du véhicule. En variante, du fluide d'échange de chaleur peut être présent à l'état liquide dans le réacteur lorsque la réaction se produit et rester à l'état liquide. Ce fluide à l'état liquide peut alors transporter la chaleur dégagée vers le composant du véhicule.

Lorsqu'un seul et même fluide est utilisé comme réactif et comme fluide caloporteur, tout ou partie de ce fluide peut se trouver à l'état liquide dans le réacteur lorsque l'on souhaite régénérer le réactif et la phase de régénération peut débuter par une étape de vidange du réacteur pour que ce fluide à l'état liquide n'y soit plus présent lors de la régénération. Ainsi, on évite que de l'énergie nécessaire à la régénération ne soit perdue à cause de la vaporisation du fluide encore présent dans le réacteur à l'état liquide.

En variante, un fluide de nature différente est utilisé pour réagir avec le réactif et pour transférer la chaleur dégagée par cette réaction.

Le procédé peut comporter l'étape selon laquelle on régénère le réactif en faisant circuler du fluide de régénération dans le circuit de régénération, notamment des gaz d'échappement.

Le composant peut être l'un au moins du moteur thermique du véhicule, de la boîte de vitesse, d'un système de dégivrage et d'un système de climatisation et/ou de chauffage de l'habitacle, d'un système d'essuyage de vitre(s) du véhicule ou une batterie du véhicule.

Le procédé peut être mis en oeuvre lors du démarrage du moteur thermique, notamment pour chauffer ce dernier.

En variante, le procédé peut être mis en oeuvre préalablement au démarrage du moteur, ce dernier n'étant alors pas nécessairement un moteur thermique. La mise en oeuvre du procédé peut être effectuée en réponse à une consigne imposée par l'utilisateur du véhicule ou être automatique, par exemple après détection d'une action de l'utilisateur, comme le déverrouillage des portes du véhicule, l'insertion de la clef de contact ou l'ouverture d'une porte du véhicule, par exemple.

Le procédé permet alors un pré-conditionnement de certains composants du véhicule. Ce pré-conditionnement peut permettre de dégivrer des vitres du véhicule ou de chauffer l'huile de la boîte de vitesse, par exemple. Ce pré-conditionnement peut en outre ou en variante permettre de chauffer l'huile ou l'eau dans le moteur et/ou l'habitacle du véhicule et/ou le produit pour l'essuyage de vitre(s) du véhicule.

Tout ou partie des caractéristiques mentionnées ci-dessus en rapport avec le dispositif de chauffage s'appliquent au procédé de chauffage ci-dessus.

L'invention pourra être mieux comprise à la lecture de la description qui va suivre d'exemples non limitatifs de mise en oeuvre de celle-ci et à l'examen du dessin annexé sur lequel :
- la figure 1 représente de façon schématique un dispositif de chauffage selon un qui ne fait partie de cet invention,
- la figure 2 représente un détail du dispositif de la figure 1 lorsque la réaction exothermique se produit,
- la figure 3 représente une variante du dispositif représenté sur la figure 2,
- la figure 4 représente de façon plus complète le dispositif de la figure 3,
- la figure 5 représente une autre variante du dispositif représenté sur la figure 4,
- la figure 6 représente de façon schématique le dispositif de la figure 1 lors de la régénération du réactif,
- la figure 7 représente de façon schématique un dispositif de chauffage selon l'invention,
- la figure 8 représente un détail du dispositif représenté sur la figure 7 lorsque la réaction exothermique se produit,
- la figure 9 représente le dispositif de la figure 7 lorsque de la chaleur est transférée vers le composant du véhicule,
- la figure 10 représente de façon partielle le dispositif de la figure 7 lors de la régénération du réactif,
- la figure 11 représente de façon schématique un dispositif de chauffage selon un deuxième exemple de mise en oeuvre de l'invention,
- la figure 12 représente un détail du dispositif de la figure 11 lorsque la réaction exothermique a lieu,
- la figure 13 représente un détail du dispositif de la figure 11 lorsque la chaleur est transférée vers le composant du véhicule, et
- la figure 14 représente un détail du dispositif de la figure 11 lors de la régénération du réactif.

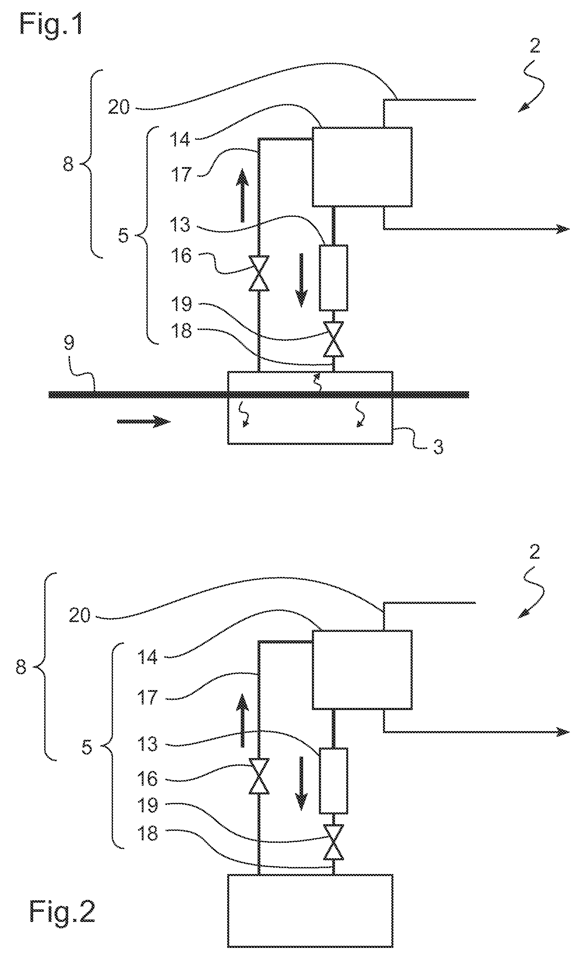

On a représenté à la figure 1 un dispositif de chauffage 2 selon un exemple qui ne fait partie de cet invention. Ce dispositif 2 est par exemple destiné à être embarqué sur un véhicule, par exemple une automobile à propulsion purement thermique ou à propulsion hybride. Le véhicule comprend par exemple un moteur à combustion interne.

Le dispositif 2 comprend un réacteur 3 dans lequel est disposé un réactif, un circuit 5 d'alimentation en fluide de réaction du réacteur 3, ce fluide réagissant avec le réactif de façon exothermique, un circuit 8 d'échange de chaleur entre le réacteur 3 et un composant du véhicule à chauffer et un circuit 9 de régénération du réactif dans le réacteur 3.

Le réacteur 3 se présente dans l'exemple décrit sous la forme d'un cylindre de section transversale circulaire. Le réacteur 3 comprend une enceinte. Dans les exemples décrits ci-après, le circuit 5 et le circuit 8 comprennent au moins une portion commune dont une fraction est formée par l'enceinte. Dans les exemples décrits ci-après, le réactif est de la zéolite et le fluide de réaction est une solution aqueuse formée par un mélange d'eau et de glycol. Toujours dans les exemples décrits, le circuit 9 de régénération est parcouru par un fluide de régénération formé par les gaz d'échappement, de sorte que le circuit 9 de régénération forme une partie de la ligne d'échappement du moteur à combustion interne du véhicule.

Dans l'exemple qui va être décrit, le composant du véhicule est un moteur à combustion interne du véhicule. Le dispositif 2 est alors utilisé pour chauffer ce moteur lors de son démarrage.

Dans des variantes non décrites, le dispositif 2 peut être utilisé pour chauffer un ou plusieurs composants du véhicule à d'autres moments que lors du démarrage du moteur. Le dispositif 2 peut par exemple chauffer un ou plusieurs composants avant le démarrage du moteur, réalisant un pré-conditionnement de ce ou ces composants.

Ce pré-conditionnement peut résulter d'un ordre donné par l'utilisateur du véhicule avant que celui-ci ne démarre le véhicule, par exemple un appui sur un bouton de déclenchement du dispositif 2. En variante, le pré-conditionnement résulte d'un ordre généré automatiquement, par exemple du fait de la détection de l'entrée dans le véhicule d'un utilisateur, notamment l'insertion de la clef de contact, le déverrouillage des portes ou l'ouverture d'une porte.

Dans le cas d'un tel pré-conditionnement, le dispositif 2 peut ainsi transférer, préalablement au démarrage du moteur, de la chaleur à un système de dégivrage de vitres, par exemple le pare-brise du véhicule, à la boîte de vitesses du véhicules, notamment pour chauffer l'huile de celle-ci, ou à l'habitacle du véhicule, pour le confort du ou des utilisateurs du véhicule.

Dans chacun des exemples de mise en oeuvre de l'invention qui vont être décrits, le dispositif 2 peut être utilisé de façon cyclique, chaque cycle comprenant successivement:
- une phase de stockage dans laquelle le dispositif est au repos,
- une phase de réaction lors de laquelle une réaction exothermique entre le fluide de réaction et le réactif a lieu, cette phase étant amorcée lorsque l'on amène le fluide de réaction au contact du réactif. La chaleur dégagée est alors transmise vers le composant du véhicule à l'aide du circuit 8 d'échange de chaleur, et
- une phase de régénération lors de laquelle le réactif et le fluide de réaction sont ramenés à l'état qu'ils avaient préalablement à la réaction exothermique. Cette phase de régénération est notamment effectuée en amenant de la chaleur dans l'enceinte dans laquelle a eu lieu la réaction exothermique.

Lorsque le réactif est de la zéolite et que le fluide de réaction est un mélange d'eau et de glycol, la réaction exothermique peut être l'adsorption d'eau par la zéolite et la régénération peut être obtenue en chauffant fortement la zéolite saturée en eau. La régénération peut alors correspondre à la désorption de l'eau précédemment adsorbée. Cette eau libérée sous forme de vapeur peut ensuite se condenser. En fonction de la température dans le réacteur, le glycol peut être vaporisé et accompagner la vapeur d'eau. Lors de la phase de régénération, la température de la zéolite peut être amenée à environ 250°C par le fluide de régénération.

Les différents constituants du dispositif 2 peuvent être configurés pour que la phase de chauffage permette de fournir environ 15 kW de puissance de chauffage pendant environ deux minutes et que la phase de régénération dure environ vingt minutes.

On va maintenant décrire plus en détail en référence aux figures 1 à 6 le dispositif 2 selon un exemple qui ne fait partie de cet invention.

Les circuits 5 et 8 sont dans cet exemple parcourus par un seul et même fluide commun dont une fraction joue le rôle de fluide de réaction réagissant avec le réactif et dont une autre fraction transporte la chaleur dégagée par la réaction exothermique entre le fluide de réaction et le réactif.

Le fluide commun circulant dans le circuit 5 et dans le circuit 8 peut ainsi venir contacter les parois de l'enceinte dans au moins une zone de celle-ci ou dans la totalité de celle-ci.

Le réactif est dans l'exemple décrit de la zéolite et le fluide commun circulant dans les circuits 5 et 8 est un mélange d'eau et de glycol. L'enceinte contient par exemple quelques kg de zéolite, notamment 2 kg de zéolite et cette dernière se présente dans l'exemple décrit sous la forme de billes empilées dans le réacteur.

Dans l'exemple des figures 1 à 6, le circuit 5 forme une portion du circuit 8. Le circuit 5 d'alimentation en fluide de réaction comprend dans l'exemple décrit un réservoir de fluide 13 et un condenseur 14. Le réservoir 13 et le condenseur 14 sont disposés en altitude par rapport au réacteur 3 dans l'exemple considéré, étant au-dessus du réacteur 3 ou en biais par rapport à celui-ci.

Le circuit 5 comprend dans cet exemple une conduite 17 reliant le condenseur 14 avec le réacteur 3 via une vanne 16 et une autre conduite 18 reliant le réservoir 13 et le réacteur 3 via une vanne 19. Les vannes 16 et 19 peuvent être des clapets anti-retour commandables.

La conduite 17 peut s'étendre verticalement et être ou non disposée le long d'une source chaude du véhicule.

Dans l'exemple décrit, le réservoir 13 n'est pas dimensionné uniquement en fonction du volume de fluide commun que l'on souhaite faire réagir avec la zéolite, comme on le verra par la suite. Le condenseur 14 est ici dimensionné selon la puissance que l'on souhaite obtenir lors de la phase de régénération.

Le circuit 8 d'échange de chaleur entre le réacteur 3 et le composant comprend dans l'exemple décrit en plus du circuit 5 un sous-circuit additionnel 20 reliant le condenseur 14 et le composant du véhicule. Ce sous-circuit additionnel 20 ne communique pas avec le circuit 5 dans l'exemple considéré. Le condenseur 14 fait ici office d'échangeur thermique par lequel de la chaleur peut être transférée du fluide circulant dans le circuit 5 au fluide circulant dans le sous-circuit additionnel 20. Le sous-circuit additionnel 20 peut être parcouru par le liquide de refroidissement du moteur, par exemple.

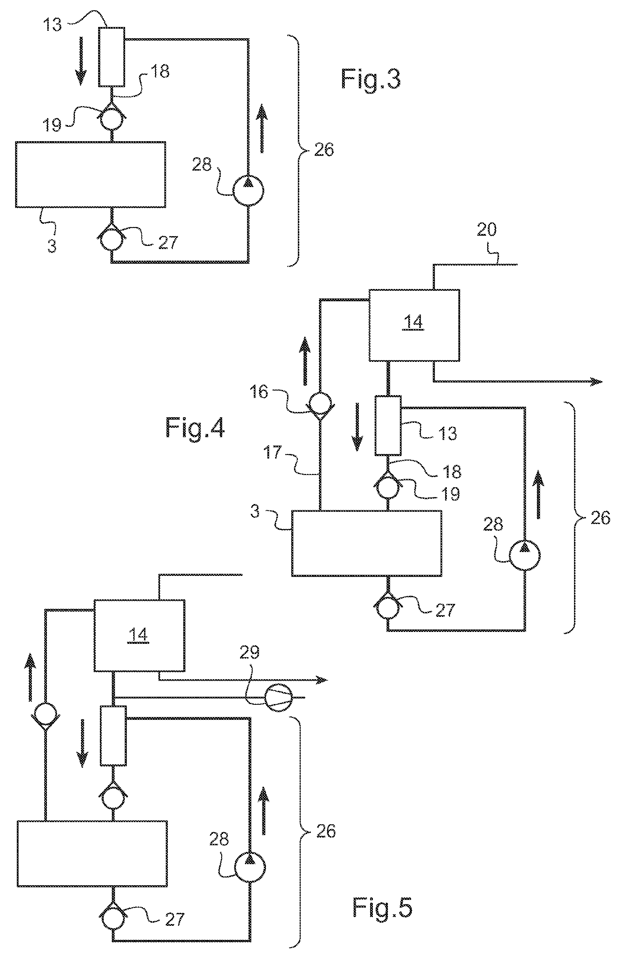

Dans la variante représentée sur la figure 3, le dispositif 2 comprend en outre un circuit auxiliaire 26. Ce circuit auxiliaire 26 s'étend dans l'exemple considéré entre le réacteur 3 et le réservoir 14. Dans l'exemple représenté, le circuit auxiliaire 26 comprend une vanne 27 commandant l'entrée de fluide dans ce circuit 26 depuis le réacteur 3 et une pompe 28. La vanne 27 est par exemple un clapet anti-retour

Dans la variante représentée sur la figure 5, le dispositif 2 comprend encore un système 29 de vidange du condenseur 13. Ce système est par exemple réalisé en utilisant une pompe à vide. Cette dernière peut permettre de purger le condenseur 13 des résidus issus des cycles de fonctionnement précédents du dispositif 2 et qui ne sont pas condensés lors de ces cycles. Ces résidus peuvent en effet nuire au bon fonctionnement du condenseur 13.

La pompe 29 peut être activée ponctuellement ou périodiquement, par un opérateur ou de façon prédéfinie.

En variante, aucun système de vidange n'est présent mais le condenseur 13 peut être sur-dimensionné de manière à fonctionner de façon satisfaisante pendant la durée de vie du dispositif 2 malgré l'accumulation dans ce dernier au fil des cycles de résidus non condensés.

Le circuit 9 de régénération est représenté schématiquement et peut comprendre une pluralité de conduites traversant le réacteur 3. Lorsque ces conduites sont parcourues par les gaz d'échappement, ces derniers peuvent faire augmenter de façon importante la température dans le réacteur 3. Dans l'exemple considéré, le circuit 9 de régénération est dépourvu de branche contournant le réacteur 3.

On va maintenant décrire plus en détail l'état du dispositif 2 lors d'un cycle de fonctionnement de ce dernier.

Lors de la phase de stockage, le dispositif 2 est au repos et les vannes 16 et 18 sont fermées. On évite ainsi que le fluide commun contenu sous forme liquide dans le réservoir 13 ne vienne au contact de la zéolite et n'amorce la réaction exothermique de façon intempestive. Pendant cette phase de stockage, qui est postérieure à la phase de régénération du cycle précédent, la température et la pression peuvent baisser avant de se stabiliser respectivement à la température ambiante et à une valeur inférieure à 100 mbars.

Lorsque l'on souhaite chauffer le composant du véhicule, on amorce la réaction entre l'eau et la zéolite en amenant le mélange d'eau et de glycol au contact de la zéolite. Dans les exemples décrits, le mélange d'eau et de glycol s'écoule sous forme liquide par gravité dans le réacteur 3 à travers la conduite 18 en ouvrant la vanne 19.

On cherche alors à ce que le fluide commun se répartisse de façon homogène dans l'enceinte du réacteur 3. Cette répartition homogène du fluide commun peut être favorisée par la configuration du réacteur et/ou, comme dans l'exemple de la figure 3, à l'aide du circuit auxiliaire 26, comme expliqué ci-après.

Une fraction du fluide commun s'écoulant dans le réacteur réagit alors avec la zéolite anhydre, étant adsorbée par celle-ci. Dans l'exemple décrit, seule l'eau est adsorbée par la zéolite selon la réaction exothermique. Une fraction du fluide commun restant dans le réacteur va être vaporisée du fait de la chaleur dégagée par la réaction et passer dans la conduite 17 pour gagner le condenseur 14 où elle se condense. Du fait de cette condensation, de la chaleur est générée dans le condenseur 14 et cette chaleur est transmise au fluide circulant dans le sous-circuit 20, ce sous-circuit 20 traversant le condenseur 14 ou étant disposé à proximité de ce dernier.

Une autorégulation de la quantité d'eau et de glycol dans le réacteur peut se produire lors de cette phase. En effet, lorsque de l'eau est ajoutée dans le réacteur 3, la température dans ce dernier va diminuer mais la capacité d'adsorption de la zéolite va augmenter, favorisant la réaction et, du fait de l'augmentation de la chaleur due à l'accroissement de la réaction, vaporisant davantage d'eau.

Du fait de la condensation dans le condenseur 14 et du transfert de la chaleur dégagée par la réaction entre l'eau et la zéolite, la température du fluide circulant dans le sous-circuit 20 augmente, entraînant une augmentation de la température de condensation. Cela provoque une augmentation de la température et de la pression auxquelles l'adsorption d'eau par la zéolite a lieu, améliorant alors la capacité d'adsorption de la zéolite.

La variante des figures 3 et 4 permet de favoriser la réaction exothermique dans le réacteur 3. En effet, l'eau en excès dans le réacteur qui ne réagit pas avec la zéolite ou n'est pas vaporisée par celle-ci, car par exemple trop éloignée de la zone dans laquelle se trouve la zéolite, peut recirculer dans le circuit 26 et être réacheminée dans le réacteur 3 où elle pourra réagir avec la zéolite ou être vaporisée par celle-ci. La pompe 28 et la vanne 27 peuvent être commandées pour permettre cette recirculation tant que la réaction se produit et/ou tant que de l'eau liquide se trouve dans le réacteur 3.

Lorsque l'on cherche à amorcer la réaction exothermique, seule la vanne 19 peut être ouverte, la vanne 16 restant fermée. Le réacteur 3 dans lequel la pression est alors faible peut alors fonctionner comme une pompe aspirant le mélange liquide d'eau et de glycol contenu dans le réservoir 14.

La vanne 16 peut n'être ouverte pour laisser passer le fluide à l'état de vapeur que lorsque la réaction exothermique est en cours. La pression dans le réacteur 3 augmentant, une plus grande quantité d'eau peut être adsorbée par la zéolite sans que l'eau non adsorbée ne soit vaporisée. En conséquence, la température de la zéolite peut devenir très supérieure à la température dans le condenseur 13 puis la vanne 16 peut être ouverte.

Lorsque la réaction exothermique est terminée, la phase de régénération peut avoir lieu, immédiatement ou après une temporisation. La phase de régénération peut débuter par une étape de vidange du mélange liquide d'eau et de glycol encore présent dans le réacteur 3. Cette vidange peut permettre d'éviter qu'une partie de la chaleur transmise par le fluide de régénération et/ou par la réaction de régénération ne soit consommée pour vaporiser ce mélange liquide encore présent dans le réacteur 3. En outre, cette vidange peut permettre d'éviter que le glycol ne soit soumis aux très hautes températures dans le réacteur lors de la phase de régénération, ces températures risquant de dégrader le glycol.

Dans le cas du dispositif représenté sur les figures 3 et 4, cette vidange peut être assurée grâce au circuit additionnel 26. La pompe 28 est ainsi activée pour faire circuler le mélange liquide restant dans le réacteur 3 vers le réservoir 14.

Lorsque les gaz d'échappement parcourent le circuit 9 de régénération et traversent le réacteur 3, la température augmente dans ce dernier. L'eau adsorbée par la zéolite lors de la réaction exothermique est alors désorbée. Cette eau sous forme gazeuse est transportée via la conduite 17 dans le condenseur 14 où elle passe à l'état liquide. L'eau liquide s'écoule alors dans le réservoir 13 où elle est stockée. La chaleur dégagée lors de cette condensation peut également être transmise au composant du véhicule.

Lorsque le dispositif 2 contient le système de vidange 29 du condenseur 14, ce dernier peut être ponctuellement ou périodiquement activé pour éliminer les résidus non condensés à la suite des cycles précédents. Ce système 29 est par exemple activé tous les cinq ans.

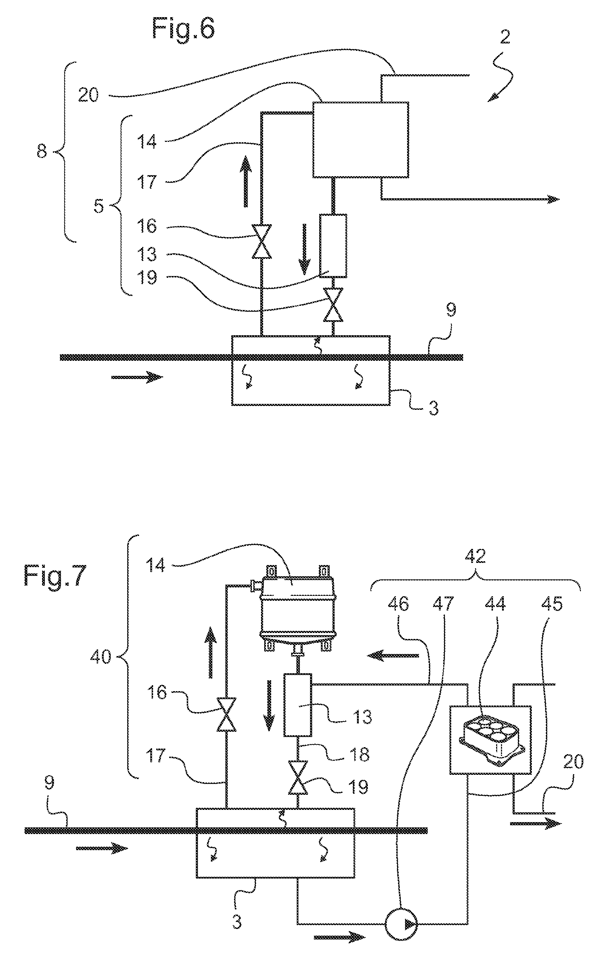

On va maintenant décrire en référence aux figures 7 à 10 un dispositif 2 selon un premier exemple de mise en oeuvre de l'invention. Comme dans le dispositif selon le premier exemple de mise en oeuvre décrit en référence aux figures 1 à 6, le circuit 5 et le circuit 8 sont tous deux parcourus par un seul et même fluide commun dont une fraction réagit avec le réactif, formant ainsi le fluide de réaction, et dont une autre fraction transporte vers le composant du véhicule la chaleur dégagée par la réaction dans le réacteur 3.

Contrairement au premier exemple de mise en oeuvre de l'invention, seule une portion du circuit 5 d'alimentation en fluide de réaction est commune à ce circuit 5 et au circuit 8 d'échange de chaleur. Cette portion commune est formée par le réservoir 13, la conduite 18 comprenant la vanne 19 et l'enceinte du réacteur 3.

Dans cet exemple, le fluide commun est également un mélange d'eau et de glycol. Le réservoir 13 est dans cet exemple dimensionné pour contenir sous forme liquide :
- la quantité d'eau engagée dans la réaction exothermique avec la zéolite, cette quantité correspondant dans cet exemple à une masse d'eau représentant environ 15 % à 20 % de la masse de la zéolite anhydre,
- une quantité d'eau en excès, et
- la quantité de glycol formant l'autre partie du fluide commun.

Le circuit 5 d'alimentation en fluide de réaction comprend dans cet exemple une portion propre 40 comprenant la conduite 17, la vanne 16 et le condenseur 14.

Le circuit 8 d'échange comprend une portion propre 42 et un sous-circuit additionnel 20 transférant la chaleur vers le composant du véhicule à chauffer. La portion propre 42 au circuit 8 d'échange de chaleur comprend dans cet exemple un échangeur thermique 44, une conduite 45 reliant le réacteur 3 à l'échangeur thermique 44, une conduite 46 reliant l'échangeur thermique 44 et le réservoir 13 et une pompe 47 montée dans la conduite 45. La pompe 47 est dans cet exemple disposée à un point bas de la portion propre 42 du circuit 8 d'échange de chaleur.

L'échangeur thermique 44 est configuré pour permettre le transfert au fluide circulant dans le sous-circuit 20 de la chaleur véhiculée par le fluide commun circulant dans la portion propre 42 au circuit 8 d'échange.

On va maintenant décrire plus en détail l'état du dispositif 2 lors d'un cycle de fonctionnement.

Lors de la phase de stockage, le dispositif 2 est au repos et les vannes 16 et 19 sont fermées. On évite ainsi que le fluide contenu sous forme liquide dans le réservoir 13 ne vienne au contact de la zéolite et n'amorce la réaction exothermique de façon intempestive. Pendant cette phase de stockage, qui est postérieure à la phase de régénération du cycle précédent, la température et la pression peuvent baisser avant de se stabiliser respectivement à la température ambiante et à une valeur inférieure à 100 mbar.

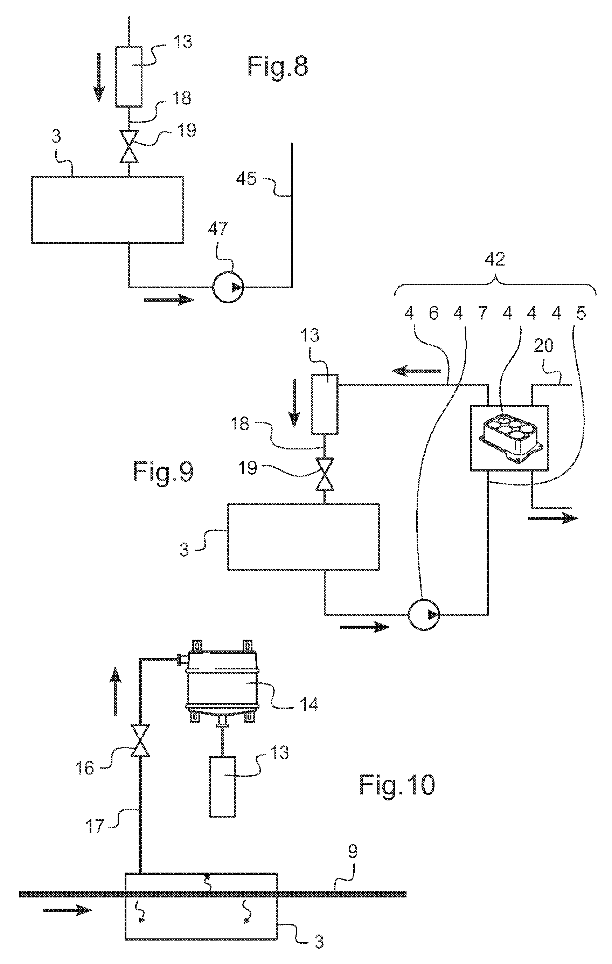

On va maintenant décrire l'état du dispositif 2 de la figure 7 lors de phase de chauffage en référence aux figures 8 et 9. Lorsque l'on souhaite chauffer le composant du véhicule, on amorce la réaction entre l'eau et la zéolite en amenant le mélange d'eau et de glycol au contact de la zéolite. Dans les exemples décrits, le mélange sous forme liquide s'écoule par gravité dans le réacteur 3 à travers la conduite 18 en ouvrant la vanne 19. L'eau étant en excès, tout le volume de zéolite est alors noyé dans le mélange d'eau et de glycol. La configuration du réacteur, et/ou la commande des vannes 16 et 19, peut permettre que cet écoulement du réservoir 13 vers le réacteur 3 soit homogène et que l'eau soit répartie de façon uniforme dans le réacteur 3.

La réaction exothermique débute ensuite. Une fraction de l'eau est adsorbée par la zéolite, selon la réaction exothermique. Seule l'eau étant adsorbée par la zéolite, la proportion de glycol dans le mélange liquide augmente au fil de la réaction, modifiant la température d'ébullition du mélange. La chaleur dégagée par cette réaction réchauffe la fraction du fluide commun non consommée par la réaction et qui subsiste dans le réacteur 3. Cette fraction peut voir sa température s'élever jusqu'à environ 110°C.

Lorsque la réaction exothermique est en cours, la pompe 47 peut ne pas être activée. Dans ce cas, il peut ne pas être nécessaire de prévoir une vanne dans la portion propre 42 pour empêcher la fraction du fluide commun chauffée par la réaction de gagner l'échangeur thermique 44.

La réaction peut faire augmenter la température dans le réacteur 3 qui peut atteindre environ 150 °C, par exemple. La réaction peut également faire augmenter la pression dans le réacteur 3 qui peut atteindre des valeurs supérieures à la pression atmosphérique.

Le dispositif 2 peut être configuré pour que l'eau ne réagissant pas avec la zéolite ne soit pas vaporisée, contrairement à ce qui a été décrit en référence au exemple qui ne fait partie de cet invention. Dans cet exemple, on transfère la chaleur dégagée par la réaction au sous-circuit 20 en faisant circuler dans la portion propre 42 au circuit 8 d'échange de chaleur le mélange d'eau et de glycol subsistant à l'état liquide dans le réacteur et chauffé par la réaction. Dans ce but, on peut actionner la pompe 47 pour diriger le mélange vers l'échangeur thermique 44.

Pour que l'eau en excès dans le réacteur reste à l'état liquide malgré la réaction exothermique en cours dans le réacteur 3, on peut agir sur la zéolite. On utilise par exemple une zéolite très peu saturée à 120°C sous une pression de 2 bars. En variante, pour obtenir ce résultat, on peut diminuer la quantité de zéolite dans le réacteur 3. De cette façon, une chaleur moins importante sera dégagée lorsque la réaction est amorcée, la pression dans le réacteur 3 restant alors inférieure à 2 bars et la température étant moindre.

Ces solutions permettent que la réaction d'adsorption s'arrête avant que les conditions de vapeur saturante de l'eau soient atteintes.

On va maintenant décrire en référence à la figure 10 l'état du dispositif 2 lors de la phase de régénération. La régénération de la zéolite et de l'eau peut commencer par une phase de vidange du fluide commun encore présent sous forme liquide dans le réacteur 3. La pompe 47 peut être actionnée pour faire circuler le fluide jusqu'au réservoir 13. La vanne 19 peut alors être fermée pour empêcher que le fluide commun ayant parcouru la portion propre 42 au circuit 8 ne retourne dans le réacteur 3. Simultanément ou non, la vanne 16 permettant à la vapeur d'eau et, le cas échéant de glycol, de gagner le condenseur 14 via la conduite 17 peut être ouverte.

Les gaz d'échappement parcourent ensuite le circuit 9 de régénération. En conséquence, la température dans le réacteur 3 augmente, conduisant à la désorption de la zéolite. La vapeur d'eau va ensuite se condenser dans le condenseur 14 avant de s'écouler dans le réservoir 13. Du fait de cette condensation, de la chaleur est dégagée dans le condenseur 14. Cette chaleur peut être utilisée à nouveau pour chauffer encore le composant du véhicule ou autre, par exemple l'habitacle du véhicule.

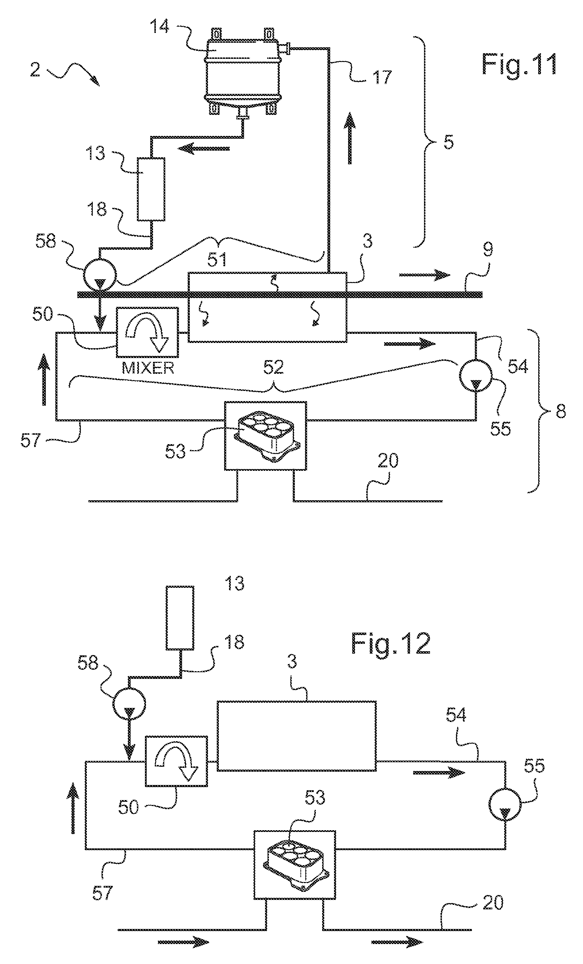

On va maintenant décrire en référence aux figures 11 à 14 un dispositif de chauffage 2 selon un deuxième exemple de mise en oeuvre de l'invention.

Contrairement aux deux exemples viennent d'être décrits, le fluide de réaction est ici distinct du fluide d'échange de chaleur.

Dans cet exemple, seule une portion du circuit 5 d'alimentation en fluide de réaction est commune avec le circuit 8 d'échange de chaleur. Cette portion comprend un mélangeur 50 dans lequel débouchent la portion propre 51 du circuit 5 d'alimentation en fluide de réaction et la portion propre 52 du circuit 8 d'échange de chaleur. La portion commune comprend en outre l'enceinte du réacteur 3.

La portion propre 51 du circuit 5 d'alimentation comprend dans cet exemple le réservoir 13 et le condenseur 14. Le réservoir 13 et le condenseur 14 sont disposés en altitude par rapport au réacteur 3 dans l'exemple considéré, étant au-dessus du réacteur 3 ou en biais par rapport à celui-ci. La portion propre 51 au circuit 5 d'alimentation comprend encore dans cet exemple une conduite 17 reliant le condenseur 14 avec le réacteur 3 sans l'intermédiaire de vanne et une autre conduite 18 reliant le réservoir 13 et le mélangeur 50 via une pompe 58 et, le cas échéant, via une vanne non représentée.

La portion propre 52 au circuit 8 d'échange de chaleur comprend dans cet exemple une pompe 55, un échangeur thermique 53, une conduite 54 reliant le réacteur et l'échangeur thermique 53 via la pompe 55, et une conduite 57 reliant l'échangeur thermique 53 et le mélangeur 50. L'échangeur 53 est configuré pour permettre un échange de chaleur entre le fluide circulant dans ladite portion propre 52 et le fluide circulant dans le sous-circuit additionnel 20, ce dernier étant par exemple le liquide de refroidissement moteur.

Selon ce troisième exemple de mise en oeuvre, le fluide de réaction parcourant la portion propre 51 au circuit 5 d'alimentation peut être un mélange d'eau et de glycol tandis que le fluide d'échange de chaleur circulant dans la portion propre 52 au circuit 8 d'échange de chaleur peut être une huile de synthèse ou un mélange d'une huile de synthèse et d'un tensioactif. Cette huile est choisie pour ne pas réagir avec la zéolite. Il s'agit par exemple d'huile de type Jarytherm^{R} commercialisée par la société Total^{R}.

Le fluide d'échange est largement en excès par rapport au fluide de réaction, de sorte que dans le réacteur 3, le fluide de réaction est dispersé au sein du fluide d'échange de chaleur.

Selon ce troisième exemple de mise en oeuvre, le réservoir 13 ne contient que du mélange liquide d'eau et de glycol. Le réservoir 13 est dans cet exemple dimensionné pour recevoir une quantité d'eau suffisante pour réagir avec la quantité de zéolite dans le réacteur 3. Le réacteur est par exemple dimensionné pour recevoir la quantité d'eau nécessaire à faire réagir toute la zéolite dans le réacteur 3. Cette quantité d'eau correspond dans cet exemple à une masse d'eau représentant environ 15 % à 20 % de la masse de la zéolite anhydre. Le réacteur contient en outre le glycol formant l'autre partie du fluide de réaction pour cette masse d'eau. Contrairement à ce qui a été décrit en référence aux figures 1 à 10, le réservoir peut ne pas contenir davantage d'eau que celle nécessaire pour faire réagir toute la zéolite présente dans le réacteur 3.

La quantité de fluide d'échange de chaleur dans le circuit 8 peut être suffisante pour qu'à chaque instant, la zéolite contenue dans le réacteur 3 soit immergée, ou noyée, dans ce fluide d'échange de chaleur. Cette quantité peut être choisie pour que l'enceinte du réacteur soit remplie d'huile. En conséquence, la zéolite n'est pas à l'air libre et il est possible de ne pas prévoir de vanne empêchant la communication fluidique entre le condenseur 14 et le réacteur 3.

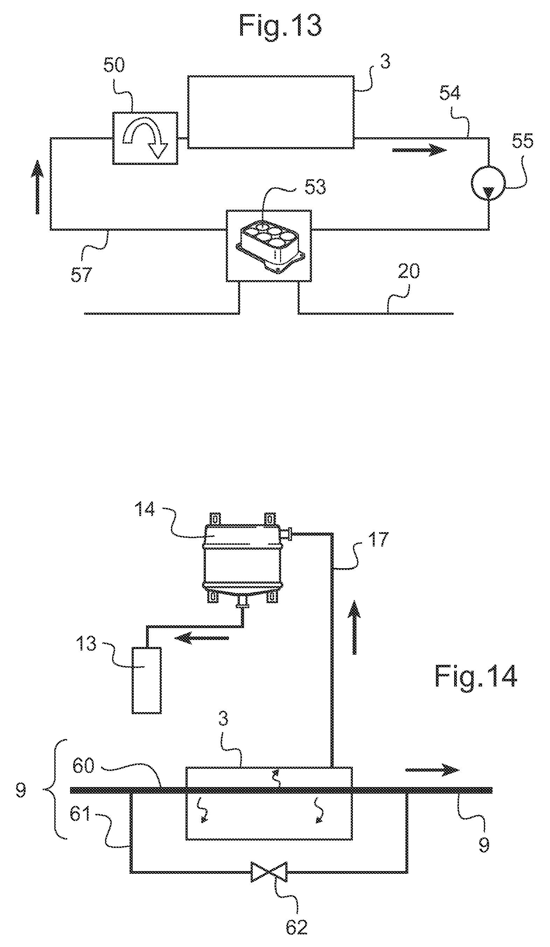

Toujours selon ce deuxième exemple de mise en oeuvre de l'invention, le circuit 9 de régénération peut comprendre deux portions en parallèles 60 et 61 non représentées sur la figure 11 mais visibles sur la figure 14. La portion 60 traverse le réacteur 3 tandis que la portion 61 contourne ce dernier (cette portion 61 étant appelée « bypass » en anglais).

Une vanne 62 est disposée dans la portion 61 dans l'exemple représenté et, selon la position de cette vanne 62, des gaz d'échappement contournent ou non le réacteur 3.

On va maintenant décrire en référence aux figures 12 à 14 l'état du dispositif 2 de la figure 11 lors des différentes phases d'un cycle de fonctionnement.

Lors de la phase de stockage, le système est au repos et le fluide de réaction est contenu dans le réservoir à l'état liquide. La zéolite est protégée d'éventuelles vapeurs d'eau subsistant dans le condenseur 14 grâce au fluide d'échange dans lequel elle est noyée. Il n'y a ainsi pas ou peu de risques que la réaction exothermique soit amorcée bien qu'aucune vanne n'empêche les vapeurs d'eau résiduelles dans le condenseur de passer dans le réacteur 3.

Pendant cette phase de stockage, qui suit une phase de régénération d'un cycle de fonctionnement précédent du dispositif, la température et la pression peuvent baisser avant de se stabiliser respectivement à la température ambiante et à une valeur inférieure à 100 mbar.

Lorsque l'on souhaite amorcer la réaction de la zéolite avec l'eau, on fait circuler le fluide de réaction à l'état liquide contenu dans le réservoir 13 vers le mélangeur 50, par exemple en activant la pompe 58. Une phase de pré-mélange est assurée par le mélangeur 50 pour s'assurer que le fluide de réaction est réparti d'une façon relativement homogène au sein du fluide d'échange. La présence d'un tensioactif dans le fluide en sortie du mélangeur 50 résultant du mélange du fluide de réaction et du fluide d'échange de chaleur permet d'assurer une dispersion de l'eau dans le fluide d'échange de chaleur. Ce tensioactif peut appartenir au fluide d'échange de chaleur ou être formé par le glycol appartenant au fluide de réaction lorsque le fluide d'échange de chaleur est simplement de l'huile de synthèse.

Le fluide pénétrant dans le réacteur 3 se présente par exemple sous la forme d'huile dans laquelle de fines gouttelettes d'eau sont présentes. Une fois dans le réacteur 3, ces gouttelettes viennent au contact des billes de zéolite pour provoquer avec elles la réaction exothermique. La présence de tensioactif dans le fluide en sortie du mélangeur qui circule dans le réacteur 3 permet à ces gouttelettes de contacter les billes de zéolite malgré l'obstacle formé par la tension de surface de l'huile dans laquelle les gouttelettes sont dispersées.

Les quantités respectives d'eau et d'huile dans le dispositif 2 peuvent être déterminées de manière à ce que l'huile véhicule l'eau du mélangeur 50 vers le réacteur 3 et ne fasse pas obstacle à la réaction entre l'eau et la zéolite. Le dispositif 2 peut être configuré de manière à ce que le rapport entre le débit d'huile en entrée du mélangeur 50 et le débit d'eau dans le fluide de réaction en entrée de ce même mélangeur 50 soit supérieur à une valeur seuil, par exemple 3 ,3. Ce seuil peut garantir que l'huile et l'eau seront en bonnes proportions l'une par rapport à l'autre pour que la réaction se déroule convenablement.

La réaction exothermique entre l'eau et la zéolite produit de la chaleur faisant augmenter la température dans le réacteur, par exemple jusqu'à 150 °C, voire à 200 °C, ce qui réchauffe l'huile présente dans le réacteur 3.

Comme représenté sur la figure 13, la chaleur issue de la réaction exothermique est transportée par l'huile via la conduite 54 et la pompe 55 à l'échangeur thermique 53 où elle est transférée au fluide circulant dans le sous-circuit 20, afin de chauffer le composant du véhicule.

La phase de régénération va maintenant être décrite en référence à la figure 14. A l'issue de l'étape précédente, toute l'eau a été adsorbée par la zéolite, de sorte qu'il ne reste dans le réacteur 3 que le fluide d'échange de chaleur et le glycol. La circulation d'huile dans la portion propre 52 au circuit 8 d'échange de chaleur peut être interrompue afin d'éviter que la chaleur apportée par le fluide de régénération ne soit dissipée par l'huile en dehors du réacteur.

La portion 60 du circuit 9 de régénération peut alors être parcourue par les gaz d'échappement qui font augmenter la température dans le réacteur. Lorsque la température dans le réacteur 3 devient trop importante du fait du passage des gaz d'échappement, on peut agir sur la vanne 62 pour détourner au moins une partie des gaz d'échappement du réacteur 3, afin d'éviter que la température y prenne des valeurs pouvant dégrader l'huile.

La chaleur des gaz d'échappement circulant dans la portion 60 est transmise par l'huile à la zéolite qui va alors se désorber. L'eau libérée sous forme gazeuse s'extrait alors de l'huile et gagne le condenseur 14 par l'intermédiaire de la conduite 17. L'eau se condense alors avant de regagner le réservoir 13 dans lequel elle est stockée en vue du prochain cycle. La chaleur fournie par cette condensation peut être utilisée pour chauffer de nouveau le composant du véhicule ou un autre composant ou l'habitacle du véhicule.

La pression dans le réacteur 3 peut être inférieure à 1 bar, étant par exemple de l'ordre de 500mbars. L'huile peut être choisie pour ne pas se vaporiser lorsqu'elle est soumise à de telles basses pressions et à des températures élevées. La zéolite peut être choisie de manière à ce qu'elle puisse être désorbée pour des valeurs de pression inférieures à 1 bar et des températures inférieures à 200 °C.

L'invention n'est pas limitée aux exemples qui viennent d'être décrits, et en particulier aux exemples de fluides mentionnés ci-dessus.

On peut par ailleurs combiner entre elles des caractéristiques décrites en référence à différents exemples de mise en oeuvre de l'invention.

Dans les exemples ci-dessus, lorsque le réactif est la zéolite, cette dernière peut se présenter sous la forme de billes présentant des pores de taille importante, par exemple comprise entre 0,3 et 0,8 nm, pour favoriser le contact entre le fluide de réaction et la zéolite.

Dans tous les exemples ci-dessus, la conduite empruntée par le fluide de réaction à l'état gazeux entre le réacteur et le condenseur peut être disposée à proximité d'une source de chaleur, afin de réduire les risques que le fluide désorbé de la zéolite et empruntant cette conduite à l'état gazeux se condense par inadvertance et retombe par gravité dans le réacteur avant d'être parvenu au condenseur.

L'expression « comportant un » doit être comprise comme étant synonyme de l'expression « comportant au moins un », sauf lorsque le contraire est spécifié.

## Revendications

1. Dispositif (2) de chauffage d'au moins un composant d'un véhicule, comprenant :
- un réacteur (3) dans lequel un réactif susceptible de provoquer une réaction exothermique avec un fluide de réaction est disposé,
- un circuit (8) d'échange de chaleur entre le réacteur (3) et le composant,
- un circuit (5) d'alimentation du réacteur (3) en fluide de réaction, au moins une partie dudit circuit (5) d'alimentation formant une portion commune avec le circuit (8) d'échange de chaleur, et
- un circuit (9) de régénération du réactif, **caractérisé en ce que** le circuit (5) d'alimentation en fluide de réaction comprenant une portion propre parcourue par le fluide de réaction et le circuit (8) d'échange de chaleur comprend une portion propre parcourue par le fluide d'échange de chaleur.

2. Dispositif selon la revendication 1, le réacteur (3) comprenant une enceinte définissant tout ou partie de ladite portion commune au circuit (5) d'alimentation en fluide de réaction et au circuit (8) d'échange de chaleur.

3. Dispositif selon la revendication 1 ou 2, la portion propre au circuit (8) d'échange de chaleur comprenant un échangeur thermique (44, 53) pour transférer la chaleur dégagée par la réaction à un sous-circuit additionnel (20) du circuit (8) d'échange de chaleur et la portion propre au circuit (5) d'alimentation en fluide de réaction comprenant un condenseur (14).

4. Dispositif selon l'une quelconque des revendications 1 à 3, la portion propre au circuit (5) d'alimentation en fluide de réaction et la portion propre au circuit (8) d'échange de chaleur se rejoignant en amont du réacteur (3) pour former la portion commune et ladite portion commune comprenant un mélangeur (50) configuré pour disperser le fluide de réaction au sein du fluide d'échange de chaleur.

5. Dispositif selon l'une quelconque des revendications 1 à 4, le fluide de réaction et le fluide d'échange de chaleur étant de nature différente et les quantités respectives du fluide de réaction et du fluide d'échange de chaleur étant choisies de manière à ce que le fluide d'échange de chaleur soit en excès par rapport au fluide de réaction.

6. Dispositif selon la revendication 4 ou 5, la portion propre au circuit (5) d'alimentation en fluide de réaction comprenant un réservoir (13) disposé en aval du condenseur (14).

7. Dispositif selon la revendication 3, la portion commune au circuit (5) d'alimentation en fluide de réaction et au circuit (8) d'échange de chaleur comprenant un réservoir (13) en amont duquel se rejoignent la portion propre au circuit (5) d'alimentation en fluide de réaction et la portion propre au circuit (8) d'échange de chaleur pour former ladite portion commune.

8. Dispositif selon la revendication 7, la portion propre au circuit (8) d'échange de chaleur comprenant une pompe de recirculation (47, 55).

9. Dispositif selon la revendication 7 ou 8, le fluide de réaction et le fluide d'échange de chaleur étant un seul et même fluide.

10. Procédé de chauffage d'au moins un composant à l'aide d'un dispositif (2) selon l'une quelconque des revendications 1 à 9, dans lequel :
- on alimente en fluide de réaction le réactif dans le réacteur (3) de manière à provoquer une réaction exothermique dans le réacteur (3), et
- on transfère la chaleur dégagée par ladite réaction au composant à l'aide d'un fluide d'échange de chaleur circulant dans le circuit (8) d'échange de chaleur.

11. Procédé selon la revendication 10, le fluide d'échange de chaleur et le fluide de réaction étant de nature différente ou de même nature.

## Patentansprüche

1. Vorrichtung (2) zum Erwärmen wenigstens einer Komponente eines Fahrzeugs, die Folgendes umfasst:
- einen Reaktor (3), in dem ein Reagenz, das eine exotherme Reaktion mit einem Reaktionsfluid hervorrufen kann, angeordnet ist,
- einen Wärmeaustauschkreis (8) zwischen dem Reaktor (3) und der Komponente,
- einen Kreis (5) für die Versorgung des Reaktors (3) mit Reaktionsfluid, wobei wenigstens ein Teil des Versorgungskreises (5) einen gemeinsamen Abschnitt mit dem Wärmeaustauschkreis (8) bildet, und
- einen Kreis (9) zur Wiedergewinnung des Reagenzes,
**dadurch gekennzeichnet, dass** der Kreis (5) für die Versorgung mit Reaktionsfluid einen speziellen Abschnitt aufweist, durch den das Reaktionsfluid strömt, und der Wärmeaustauschkreis (8) einen speziellen Abschnitt aufweist, durch den das Wärmeaustauschfluid strömt.

2. Vorrichtung nach Anspruch 1, wobei der Reaktor (3) einen Behälter umfasst, der den Abschnitt, der dem Kreis (5) für die Versorgung mit Reaktionsfluid und dem Wärmeaustauschkreis (8) gemeinsam ist, ganz oder teilweise definiert.

3. Vorrichtung nach Anspruch 1 oder 2, wobei der spezielle Abschnitt des Wärmeaustauschkreises (8) einen Wärmetauscher (44, 53) umfasst, um die von der Reaktion freigesetzte Wärme an einen zusätzlichen Nebenkreis (20) des Wärmeaustauschkreises (8) zu übertragen, und der spezielle Abschnitt des Kreises (5) für die Versorgung mit Reaktionsfluid einen Kondensator (14) umfasst.

4. Vorrichtung nach einem der Ansprüche 1 bis 3, wobei der spezielle Abschnitt des Kreises (5) für die Versorgung mit Reaktionsfluid und der spezielle Abschnitt des Wärmeaustauschkreises (8) auf der Einlassseite des Reaktors (3) vereinigt sind, um den gemeinsamen Abschnitt zu bilden, wobei der gemeinsame Abschnitt einen Mischer (50) umfasst, der konfiguriert ist, dass Reaktionsfluid innerhalb des Wärmeaustauschfluids zu verteilen.

5. Vorrichtung nach einem der Ansprüche 1 bis 4, wobei das Reaktionsfluid und das Wärmeaustauschfluid von unterschiedlicher Natur sind und die jeweiligen Mengen des Reaktionsfluids und des Wärmeaustauschfluids in der Weise gewählt sind, dass mehr Wärmeaustauschfluid als Reaktionsfluid vorhanden ist.

6. Vorrichtung nach Anspruch 4 oder 5, wobei der spezielle Abschnitt des Kreises (5) für die Versorgung mit Reaktionsfluid einen Vorratsbehälter (13) umfasst, der auf der Auslassseite des Kondensators (14) angeordnet ist.

7. Vorrichtung nach Anspruch 3, wobei der Abschnitt, der dem Kreis (5) für die Versorgung mit Reaktionsfluid und dem Wärmeaustauschkreis (8) gemeinsam ist, einen Vorratsbehälter (13) umfasst, auf dessen Einlassseite der spezielle Abschnitt des Kreises (5) für die Versorgung mit Reaktionsfluid und der spezielle Abschnitt des Wärmeaustauschkreises (8) vereinigt sind, um den gemeinsamen Abschnitt zu wählen.

8. Vorrichtung nach Anspruch 7, wobei der spezielle Abschnitt des Wärmeaustauschkreises (8) eine Umwälzpumpe (47, 55) enthält.

9. Vorrichtung nach Anspruch 7 oder 8, wobei das Reaktionsfluid und das Wärmeaustauschfluid ein und dasselbe Fluid sind.

10. Verfahren zum Erwärmen wenigstens einer Komponente mit Hilfe einer Vorrichtung (2) nach einem der Ansprüche 1 bis 9, wobei:
- das Reagenz in dem Reaktor (3) mit Reaktionsfluid versorgt wird, derart, dass in dem Reaktor (3) eine exotherme Reaktion hervorgerufen wird, und
- die von der Reaktion freigesetzte Wärme an die Komponente mit Hilfe eines Wärmeaustauschfluids, das in dem Wärmeaustauschkreis (8) zirkuliert, übertragen wird.

11. Verfahren nach Anspruch 10, wobei das Wärmeaustauschfluid und das Reaktionsfluid von unterschiedlicher Art oder gleicher Art sind.

## Claims

1. Device (2) for heating at least one component of a vehicle, comprising:
- a reactor (3) in which is arranged a reagent capable of bringing about an exothermal reaction with a reaction fluid,
- a heat-exchange circuit (8) for the exchange of heat between the reactor (3) and the component,
- a supply circuit (5) supplying the reactor (3) with reaction fluid, at least part of the said supply circuit (5) forming a portion in common with the heat-exchange circuit (8), and
- a regeneration circuit (9) for the regeneration of the reagent,
**characterized in that**
the reaction fluid supply circuit (5) comprising a dedicated portion through which the reaction fluid passes and the heat-exchange circuit (8) comprises a dedicated portion through which the heat-exchange fluid passes.

2. Device according to Claim 1, the reactor (3) comprising a vessel defining all or part of the said portion common to the reaction fluid supply circuit (5) and to the heat-exchange circuit (8).

3. Device according to Claim 1 or 2, the portion dedicated to the heat-exchange circuit (8) comprising a heat exchanger (44, 53) for transferring the heat given off by the reaction to an additional subcircuit (20) of the heat-exchange circuit (8) and the portion dedicated to the reaction fluid supply circuit (5) comprising a condenser (14).

4. Device according to any one of Claims 1 to 3, the portion dedicated to the action fluid supply circuit (5) and the portion dedicated to the heat-exchange circuit (8) meeting upstream of the reactor (3) to form the common portion and the said common portion comprising a mixer (50) configured to disperse the reaction fluid into the heat-exchange fluid.

5. Device according to any one of Claims 1 to 4, the reaction fluid and the heat-exchange fluid being of different kinds and the respective quantities of the reaction fluid and of the heat-exchange fluid being chosen so that the heat-exchange fluid is in excess with respect to the reaction fluid.

6. Device according to Claim 4 or 5, the portion dedicated to the reaction fluid supply circuit (5) comprising a tank (13) positioned downstream of the condenser (14).

7. Device according to Claim 3, the portion common to the reaction fluid supply circuit (5) and to the heat-exchange circuit (8) comprising a tank (13) upstream of which the portion dedicated to the reaction fluid supply circuit (5) and the portion dedicated to the heat-exchange circuit (8) meet to form the said common portion.

8. Device according to Claim 7, the portion dedicated to the heat-exchange circuit (8) comprising a recirculation pump (47, 55).

9. Device according to Claim 7 or 8, the reaction fluid and the heat-exchange fluid being one and the same fluid.

10. Method for heating at least one component using a device (2) according to any one of Claims 1 to 9, in which:
- the reagent in the reactor (3) is supplied with reaction fluid so as bring about an exothermal reaction in the reactor (3), and
- the heat given off by the said reaction is transferred to the component using a heat-exchange fluid circulating through the heat-exchange circuit (8).

11. Method according to Claim 10, the heat-exchange fluid and the reaction fluid being of different kinds or of the same kind.
